Europäisches Patentamt

European Patent Office

Office européen des brevets

(19)

(11) **EP 0 704 705 B1**

(12) **FASCICULE DE BREVET EUROPEEN**

(45) Date de publication et mention
de la délivrance du brevet:
**19.01.2000 Bulletin 2000/03**

(51) Int Cl.$^7$: **G01P 9/00**

(21) Numéro de dépôt: **95402045.9**

(22) Date de dépôt: **11.09.1995**

(54) **Procédé et dispositif pour minimiser dans un système de mesures inertielles l'erreur due à un mouvement perturbant dans la restitution de la vitesse**

Verfahren und Vorrichtung zur Minimierung eines Fehlers infolge einer Störbewegung bei der Bestimmung der Geschwindigkeit in einem Trägheitsmesssystem

Method and apparatus for minimising an error due to a disturbing movement in the determination of the speed in an inertial measuring system

(84) Etats contractants désignés:
**DE GB IT**

(30) Priorité: **28.09.1994 FR 9411573**

(43) Date de publication de la demande:
**03.04.1996 Bulletin 1996/14**

(73) Titulaire: **Aerospatiale Matra**
**75016 Paris (FR)**

(72) Inventeur: **Benes, Christian**
**F-78100 Saint Germain en Laye (FR)**

(74) Mandataire: **Bonnetat, Christian**
**CABINET BONNETAT**
**29, rue de St. Pétersbourg**
**75008 Paris (FR)**

(56) Documents cités:
**WO-A-88/05114**          **GB-A- 2 146 776**

• **JOURNAL OF GUIDANCE, vol. 6, no. 4, 1 Juillet 1983 pages 287-291, ROBIN B. MILLER 'A NEW STRAPDOWN ATTITUDE ALGORITHM'**

## Description

La présente invention concerne un procédé pour minimiser, dans un système de mesures inertielles à composants liés, l'erreur due à un mouvement perturbant quelconque dans la restitution de la vitesse, ainsi qu'un dispositif pour la mise en oeuvre de cette restitution de la vitesse à erreur minimisée.

Lors du fonctionnement d'un tel système de mesures inertielles dit à composants liés ou "strapdown", les mesures accélérométriques relatives audit système qui est mobile par rapport à un trièdre inertiel sont effectuées dans un trièdre accélérométrique qui est défini par rapport audit système, qui est soumis aux mouvements de ce dernier et qui est donc mobile par rapport audit trièdre inertiel, et ces mesures accélérométriques doivent ensuite être transformées pour être connues dans ledit trièdre inertiel.

Pour effectuer cette transformation, on détermine l'attitude entre ledit trièdre mobile et ledit trièdre fixe, à partir de données gyrométriques mesurées indiquant les variations angulaires par unité de temps entre les deux trièdres considérés.

Généralement, cette attitude est déterminée à partir d'algorithmes connus, dont l'un des plus utilisés et des mieux adaptés à ce type de calcul est l'algorithme dit de Miller, et elle est concrétisée sous forme d'un moyen de calcul, par exemple sous forme d'une matrice de transformation ou d'un quaternion de transformation.

On notera que ledit algorithme de Miller est en particulier présenté dans l'article "A new strapdown attitude algorithm" de Robin Miller, "Journal of Guidance", volume 6, n° 4, 1983.

En combinant alors les données accélérométriques, c'est-à-dire généralement des variations de vitesse par unité de temps, mesurées dans ledit trièdre mobile avec ledit moyen de calcul, on obtient des mesures définies dans le trièdre inertiel.

Toutefois, ces mesures ne sont exactes que si le mouvement entre le trièdre mobile et le trièdre fixe est invariable. Dès que ce mouvement varie, c'est-à-dire dès que le corps mobile est soumis à un mouvement supplémentaire perturbant, en plus du mouvement prescrit, il apparaît des erreurs dans la restitution de la vitesse.

Ces erreurs et les mouvements perturbants qui en sont la cause sont bien connus. Ainsi, par exemple, le document FR-2 552 222 présente deux mouvements perturbants différents, à savoir un mouvement de cône, qui est provoqué par des mouvements des axes d'entrée de gyroscopes utilisés dans le système et donnant naissance à des erreurs dans la mesure des accélérations angulaires, et un mouvement de godille ou "sculling", suivant lequel des vibrations linéaires et angulaires à fréquence relativement élevée de quelques centaines de hertz selon deux axes orthogonaux produisent une accélération linéaire uniforme le long du troisième axe orthogonal.

Ce dernier mouvement est le mouvement perturbant le plus fréquent et le plus pénalisant dans le type de système considéré. Le document US-4 675 820, par exemple, fait également mention de l'existence de ce mouvement de godille.

Aussi, pour compenser les erreurs dues à de tels mouvements perturbants, il est nécessaire d'effectuer des corrections sur les données accélérométriques mesurées pour obtenir dans ledit trièdre fixe, après transformation desdites données, des mesures de vitesse proches des valeurs effectives.

Pour un mouvement de godille, par exemple, on effectue généralement une correction de $\frac{1}{2}\Delta\vec{\Theta}\wedge\Delta\vec{V}$ sur la valeur mesurée de l'incrément de vitesse $\Delta\vec{V}$, $\Delta\vec{\Theta}$ correspondant aux variations angulaires par unité de temps entre le trièdre mobile et le trièdre fixe mesurées simultanément à $\Delta\vec{V}$, de manière à obtenir un incrément de vitesse $\Delta\vec{V}'$ destiné à être transformé, qui est défini par la relation :

$$\Delta\vec{V}' = \Delta\vec{V} - \frac{1}{2}\Delta\vec{\Theta}\wedge\Delta\vec{V}$$

Le document US-4 812 977 indique par exemple cette formule de correction pour un mouvement de godille.

Toutefois, cette solution usuelle n'est guère satisfaisante car, d'une part, elle ne permet pas d'effectuer une correction optimale puisqu'il subsiste une erreur non négligeable après la correction et, d'autre part, elle nécessite des calculs relativement importants pour sa mise en oeuvre.

La présente invention a pour objet de remédier à ces inconvénients. Elle concerne un procédé pour minimiser, dans un système de mesures inertielles à composants liés, l'erreur due à un mouvement perturbant quelconque dans la restitution de la vitesse, ladite vitesse étant restituée par la mise en oeuvre d'un procédé de restitution de vitesse approprié utilisant à cet effet des données accélérométriques et gyrométriques mesurées combinées à des coefficients spécifiques.

A cette fin, selon l'invention, ledit procédé est remarquable en ce que, pour déterminer la vitesse VF dans un trièdre inertiel fixe du système, on utilise pour la mise en oeuvre du procédé de restitution de vitesse un incrément de vitesse $\Delta\vec{V}$F présentant une forme théorique générale définie par la relation :

$$\vec{\Delta V}F = B(t) \ [\sum_{n=1}^{n=p} \vec{\Delta Vn} + (\sum_{n=1}^{n=p} an\vec{\Delta\Theta n}) \ \Lambda \ (\sum_{n=1}^{n=p} bn\vec{\Delta Vn}) \ ]$$

dans laquelle n = 1, 2, ..., p, et p est un entier supérieur ou égal à 2, $\vec{\Delta V}1$ à $\vec{\Delta V}p$ représentent des mesures accélérométriques successives effectuées dans un trièdre accélérométrique, $\vec{\Delta\Theta}1$ à $\vec{\Delta\Theta}p$ représentent des mesures gyrométriques successives, a1 à ap ainsi que b1 à bp représentent des coefficients spécifiques à déterminer, et B(t) est une matrice d'attitude dépendant du temps t et permettant d'effectuer le passage du trièdre accélérométrique vers le trièdre inertiel, et en ce que l'on réalise les opérations suivantes :

- on détermine un critère d'erreur, révélant l'erreur due à la présence dudit mouvement perturbant dans la restitution de la vitesse et déterminé à partir desdits coefficients spécifiques, ledit critère d'erreur correspondant à la valeur moyenne de la vitesse $\vec{\Delta V}moy$ obtenue à partir de l'incrément de vitesse $\vec{\Delta V}F$ ;
- on calcule les valeurs desdits coefficients spécifiques permettant de minimiser ledit critère d'erreur ; et
- on intègre lesdites valeurs calculées des coefficients dans ledit procédé de restitution de vitesse.

Ainsi, grâce à l'invention, on est en mesure de perfectionner ledit procédé de restitution de vitesse de manière à minimiser l'erreur dans la restitution de la vitesse, et ceci quel que soit le mouvement perturbant considéré.

De plus, la correction ainsi définie permet d'obtenir un résultat particulièrement précis et elle peut être mise en oeuvre avec un coût en calcul réduit.

Comme indiqué précédemment, on calcule, comme critère d'erreur, la valeur moyenne de la vitesse $\vec{\Delta V}moy$ obtenue à partir de l'incrément de vitesse $\vec{\Delta V}F$. Par exemple, lorsque le mouvement perturbant est un mouvement périodique de pulsation $\Omega$, ladite valeur moyenne de la vitesse $\vec{\Delta V}moy$ est calculée sur une période $2\pi/\Omega$ dudit mou-vement perturbant, par la relation :

$$\vec{\Delta V}moy = \Omega/2\pi \int_0^{2\pi/\Omega} \vec{\Delta V}F \ dt$$

Par ailleurs, selon l'invention, pour déterminer les coefficients a1 à ap et b1 à bp apparaissant dans la forme théorique générale de $\vec{\Delta V}F$ citée précédemment :

- on effectue un développement limité de ladite valeur moyenne de la vitesse $\vec{\Delta V}moy$ ; et
- on calcule les coefficients a1 à ap et b1 à bp permettant d'annuler au moins le premier ordre dudit développement limité.

Comme mentionné précédemment, le mouvement perturbant le plus fréquent et le plus pénalisant dans un tel système de mesures inertielles à composants liés est un mouvement de godille constitué d'un mouvement conique et d'une accélération sinusoïdale selon l'axe du mouvement conique.

Pour corriger les erreurs dues à un tel mouvement de godille dans la restitution de la vitesse, la présente invention prévoit en particulier deux solutions préférées particulièrement avantageuses.

Dans une première solution, on utilise une forme théorique générale de $\vec{\Delta V}F$ telle que définie précédemment pour laquelle p=2, permettant d'obtenir un incrément de vitesse défini par la relation :

$$\vec{\Delta V}F = B(t) \ [\Delta\vec{V}i + \Delta\vec{V}j + (ai\Delta\vec{\Theta}i + aj\Delta\vec{\Theta}j) \ \Lambda(bi\Delta\vec{V}i + bj\Delta\vec{V}j)]$$

dans laquelle, pour une valeur quelconque de ai, les coefficients aj, bi et bj vérifient :

$$\left[ \begin{array}{l} aj = lai \\ bi = -1 / (12 \; lai) \\ bj = 1 / (12 \; ai) \end{array} \right.$$

avec $\underline{l}$ solution de l'équation $l^2+6l-1 = 0$, $\Delta\vec{V}i$ et $\Delta\vec{V}j$ étant deux mesures accélérométriques successives et $\Delta\vec{\Theta}i$ et $\Delta\vec{\Theta}j$ étant deux mesures gyrométriques successives. Cette solution présente l'avantage de ne nécessiter pour sa mise en oeuvre qu'un minimum de mesures successives, à savoir deux mesures accélérométriques et deux mesures gyrométriques, et de plus la précision obtenue, dans la correction de l'erreur due au mouvement de godille perturbant, est satisfaisante.

Afin d'augmenter davantage encore cette précision, on prévoit selon l'invention une seconde solution.

Dans cette seconde solution, on utilise de façon avantageuse une forme théorique générale de $\Delta\vec{V}F$ telle que définie précédemment, pour laquelle p=3 de manière à obtenir un incrément de vitesse défini par la relation :

$$\Delta\vec{V}F = B(t) \; [\Delta\vec{V}1 + \Delta\vec{V}2 + \Delta\vec{V}3 + (a1\Delta\vec{\Theta}1 + a2\Delta\vec{\Theta}2 + a3\Delta\vec{\Theta}3) \wedge (b1\Delta\vec{V}1 + b2\Delta\vec{V}2 + b3\Delta\vec{V}3)]$$

dans laquelle, pour une valeur quelconque de a3, les coefficients a1, a2, b1, b2 et b3 vérifient :

$$\left\{ \begin{array}{ll} a1 = ka3 & b1 = -\dfrac{19}{20} \cdot \dfrac{1}{a3} \\[4mm] a2 = \dfrac{k(47k+7)}{19k^2-1} \; a3 & b2 = \dfrac{1}{20} \dfrac{133k+47}{(19k^2-1)} \cdot \dfrac{1}{a3} \\[4mm] & b3 = -\dfrac{1}{20k} \cdot \dfrac{1}{a3} \end{array} \right.$$

avec k solution de l'équation :

$$6859k^6 - 10830k^5 - 6612k^4 - 2000k^3 - 348k^2 - 30k + 1 = 0$$

En plus de permettre une correction particulièrement précise de l'erreur existant dans la restitution de la vitesse, cette seconde solution présente l'avantage d'être particulièrement bien adaptée à une utilisation conjointe avec l'algorithme de Miller cité dans le préambule et généralement utilisé pour effectuer les calculs de transformation entre le trièdre mobile et le trièdre fixe.

La présente invention concerne également un dispositif pour minimiser dans un système de mesures inertielles à composants liés l'erreur due à un mouvement perturbant quelconque dans la restitution de la vitesse, ledit dispositif permettant la mise en oeuvre de la restitution de la vitesse à erreur minimisée obtenue par le procédé conforme à l'invention décrit précédemment.

Selon l'invention, ledit dispositif qui est relié à un ensemble d'accéléromètres permettant de mesurer lesdites données accélérométriques et à un ensemble de gyromètres permettant de mesurer lesdites données gyrométriques, est remarquable en ce qu'il comporte :

- un premier calculateur périphérique susceptible d'effectuer des multiplications vectorielles ;
- un second calculateur périphérique susceptible d'effectuer des produits vectoriels ; et
- un calculateur central, programmé à réaliser, en liaison avec lesdits premier et second calculateurs périphériques, le calcul d'un incrément de vitesse $\Delta\vec{V}F$ présentant une forme théorique générale définie par la relation :

$$\vec{\Delta VF} = B(t) \; [\sum_{n=1}^{n=p} \vec{\Delta Vn} + (\sum_{n=1}^{n=p} an\vec{\Delta \Theta n}) \; \Lambda \; (\sum_{n=1}^{n=p} bn\vec{\Delta Vn}) \; ]$$

dans laquelle n = 1, 2, ..., $\underline{p}$, et $\underline{p}$ est un entier supérieur ou égal à 2, $\vec{\Delta V}1$ à $\vec{\Delta V}p$ représentent des mesures accélérométriques successives effectuées dans un trièdre accélérométrique, $\vec{\Delta \Theta}1$ à $\vec{\Delta \Theta}p$ représentent des mesures gyrométriques successives, a1 à ap ainsi que b1 à bp représentent des coefficients spécifiques déterminés à l'aide de la valeur moyenne de la vitesse $\vec{\Delta V}$moy obtenue à partir de l'incrément de vitesse $\vec{\Delta V}$F, et B(t) est une matrice d'attitude dépendant du temps $\underline{t}$ et permettant d'effectuer le passage du trièdre accélérométrique vers le trièdre inertiel.

Les figures du dessin annexé feront bien comprendre comment l'invention peut être réalisée. Sur ces figures, des références identiques désignent des éléments semblables.

La figure 1 illustre schématiquement la relation entre un trièdre accélérométrique et un trièdre inertiel dans un système de mesures inertielles à composants liés.

La figure 2 montre de façon schématique le mode de calcul usuel de la vitesse dans un système de mesures inertielles à composants liés.

La figure 3 illustre schématiquement les différentes étapes du procédé conforme à l'invention.

La figure 4 est le schéma synoptique d'un dispositif conforme à l'invention.

La présente invention est mise en oeuvre dans un système de mesures inertielles à composants liés non représenté, dans lequel on cherche à connaître la vitesse dudit système qui est mobile par rapport à un trièdre inertiel fixe Tf.

On cherche à connaître ladite vitesse à partir de mesures accélérométriques effectuées dans un trièdre accélérométrique Tm lié audit système et donc mobile par rapport audit trièdre inertiel Tf.

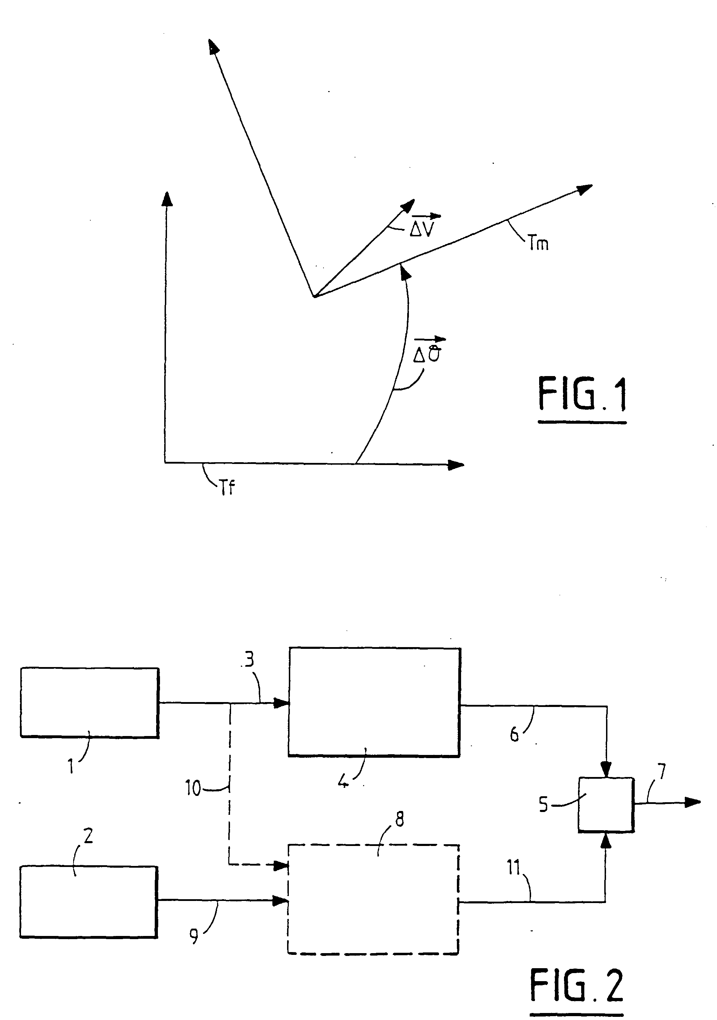

Afin de connaître la vitesse dudit système par rapport audit trièdre inertiel, il est nécessaire de connaître lesdites mesures accélérométriques dans ledit trièdre inertiel Tf. Ceci est obtenu par transformation des mesures effectuées dans ledit trièdre mobile Tm vers ledit trièdre fixe Tf, lesdits trièdres étant représentés schématiquement sur la figure 1.

La figure 2 illustre de façon schématique le mode usuel de détermination de la vitesse dans un système de mesures inertielles à composants liés, mettant en oeuvre un procédé de restitution de vitesse connu.

A cet effet, ledit système comporte :

-    d'une part, un ensemble 1 de gyromètres susceptibles d'effectuer des mesures de données gyrométriques $\vec{\Delta \Theta}$ correspondant à des variations angulaires par unité de temps, dues au mouvement du trièdre mobile Tm par rapport au trièdre fixe Tf ; et

-    d'autre part, un ensemble 2 d'accéléromètres susceptibles d'effectuer des mesures de données accélérométriques, par exemple sous forme d'incréments de vitesse $\vec{\Delta V}$ correspondant à des variations de vitesse par unité de temps mesurées dans ledit trièdre mobile Tm et concernant ledit corps mobile.

Lesdites mesures gyrométriques $\vec{\Delta \Theta}$ sont transmises par l'intermédiaire d'une liaison 3 à un premier calculateur 4 susceptible de déterminer un moyen de calcul, par exemple un quaternion ou une matrice B(t), restituant l'attitude du système et permettant d'effectuer le passage du référentiel mobile Tm vers le référentiel fixe Tf.

A cet effet, pour déterminer ledit moyen de calcul, ledit premier calculateur 4 met en oeuvre un algorithme spécifique connu, de préférence l'algorithme de Miller cité précédemment.

Si, dans une telle situation, on combine dans un second calculateur 5 ledit moyen de calcul transmis par une liaison 6 et lesdites données accélérométriques $\vec{\Delta V}$ mesurées, on obtient à la sortie dudit second calculateur 5 les données accélérométriques définies dans le référentiel fixe Tf et susceptibles d'être transmises par ledit second calculateur 5 par l'intermédiaire d'une liaison 7.

Toutefois, en raison de l'existence de mouvements perturbants, par exemple un mouvement de godille ou "sculling", tel que décrit ci-après, la restitution desdites données accélérométriques, et en particulier de la vitesse qui en résulte, est erronée.

Aussi, il est nécessaire d'effectuer une correction desdites données accélérométriques avant de les transmettre audit second calculateur 5. Ceci est effectué, de façon connue, par l'intermédiaire d'un dispositif de correction connu 8 représenté en traits interrompus sur la figure 2 et relié, respectivement par l'intermédiaire de liaisons 9 et 10, audit ensemble 2 d'accéléromètres et audit ensemble 1 de gyromètres, ledit dispositif de correction 8 transmettant les résultats de la correction effectuée audit second moyen de calcul 5 par l'intermédiaire d'une liaison 11.

Les méthodes de calcul actuellement connues et mises en oeuvre par ledit dispositif de correction connu 8 formé de façon appropriée sont peu précises et nécessitent de plus des calculs importants.

On notera, à titre d'exemple que, pour un mouvement de godille constitué d'un mouvement conique combiné à une accélération sinusoïdale, on effectue généralement une correction de $\frac{1}{2}\Delta\vec{\Theta}\wedge\Delta\vec{V}$ sur la valeur mesurée de l'incrément de vitesse $\Delta\vec{V}$, $\Delta\vec{\Theta}$ étant mesuré simultanément a $\Delta\vec{V}$, de manière à obtenir à la sortie du dispositif de correction 8, un incrément de vitesse $\Delta\vec{V}'$ destiné à être transformé et défini par la relation $\Delta\vec{V}'=\Delta\vec{V}- \frac{1}{2}\Delta\vec{\Theta}\wedge\Delta\vec{V}$.

Toutefois, de même que les autres types de correction connus, la correction ainsi définie n'est guère satisfaisante quant à la précision des résultats obtenus.

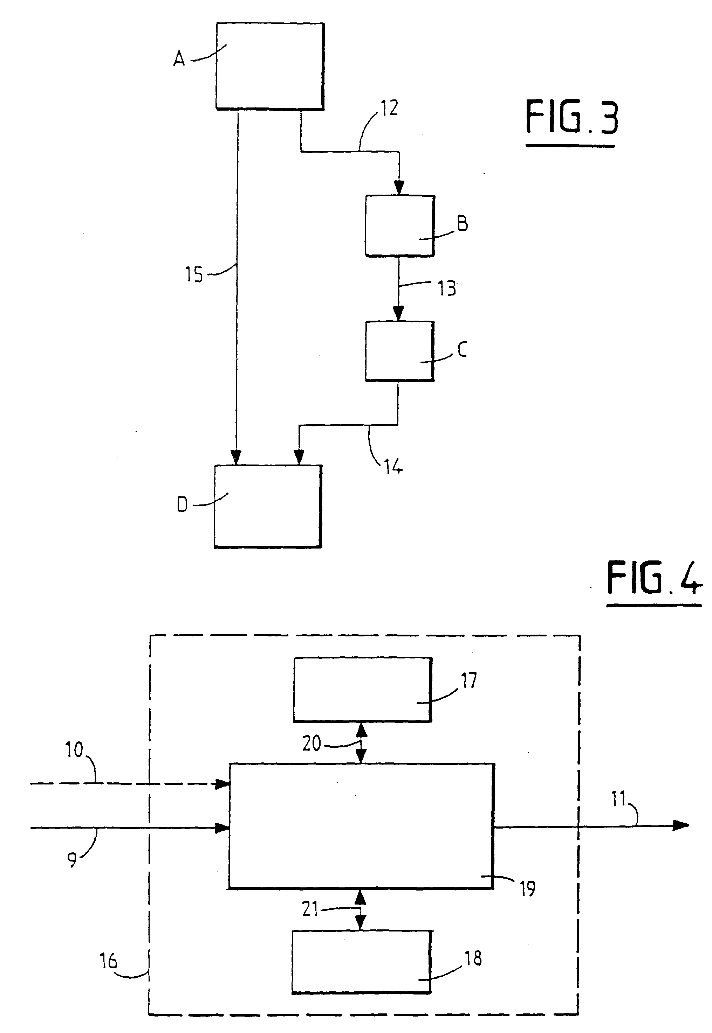

Pour remédier à ces inconvénients, la présente invention propose un procédé dont les étapes sont illustrées schématiquement sur la figure 3, permettant de perfectionner un procédé de restitution de vitesse de manière à obtenir une correction particulièrement efficace, ainsi qu'un dispositif de correction 16 représenté sur la figure 4, destiné à remplacer le dispositif de correction 8 de la figure 2 et permettant la mise en oeuvre des résultats obtenus à partir du procédé conforme à l'invention.

Pour obtenir un procédé de restitution de vitesse perfectionné permettant une correction extrêmement précise de l'erreur due à un mouvement perturbant quelconque dans la restitution de la vitesse, ledit procédé de restitution de vitesse défini dans une étape préliminaire A permettant de calculer ladite vitesse à partir desdites données accélérométriques et gyrométriques susceptibles d'être mesurées et combinées à des coefficients spécifiques, on effectue selon l'invention les étapes suivantes :

- dans une première étape B, on définit un critère d'erreur, révélant l'erreur due à la présence dudit mouvement perturbant dans la restitution de la vitesse et déterminé à partir des coefficients spécifiques utilisés dans le procédé de restitution de vitesse défini dans l'étape préliminaire A et transmis par une liaison 12 ;
- dans une deuxième étape C, on calcule les valeurs desdits coefficients spécifiques permettant de minimiser ledit critère d'erreur défini dans la première étape B et transmis par une liaison 13 ; et
- dans une troisième et dernière étape D, on intègre les valeurs calculées dans la deuxième étape C et transmises par une liaison 14 dans ledit procédé de restitution de vitesse défini dans l'étape préliminaire A et transmis par une liaison 15.

En outre, selon l'invention, pour déterminer la vitesse VF dans le trièdre inertiel fixe Tf du système, on utilise pour la mise en oeuvre du procédé de restitution de vitesse un incrément de vitesse $\Delta\vec{V}F$ présentant une forme théorique générale définie par la relation $\Delta\vec{V}F = B(t)\Delta\vec{V}eq$, dans laquelle $\Delta\vec{V}eq$ représente un incrément de vitesse formé, tel que précisé ci-après, à partir des données accélérométriques mesurées dans le trièdre accélérométrique mobile Tm, des données gyrométriques, et des coefficients spécifiques, et B(t) une matrice d'attitude dépendant du temps $\underline{t}$ et permettant d'effectuer le passage du trièdre accélérométrique Tm vers le trièdre inertiel Tf.

Ladite matrice B(t) est calculée dans ledit premier calculateur 4, comme mentionné précédemment, et ledit incrément de vitesse $\Delta\vec{V}eq$ est formé dans le dispositif de correction 16.

Pour obtenir la correction appropriée à un mouvement perturbant déterminé, il convient donc de déterminer ledit incrément de vitesse $\Delta\vec{V}eq$. Cette détermination est effectuée à partir de mesures de vitesse effectuées dans le trièdre mobile, tel que mentionné dans le procédé conforme à l'invention présenté précédemment et tel que décrit plus en détail ci-après à partir d'exemples d'illustration.

A titre d'exemple, pour un mouvement perturbant correspondant à un mouvement de godille constitué d'un mouvement conique et d'une accélération sinusoïdale, on utilise de préférence pour la mise en oeuvre du procédé conforme à l'invention une forme générale de $\Delta\vec{V}F$ définie par la relation :

$$\Delta\vec{V}F = B(t) \; [\sum_{n=1}^{n=p} \Delta\vec{V}n + (\sum_{n=1}^{n=p} an\Delta\vec{\Theta}n) \wedge (\sum_{n=1}^{n=p} bn\Delta\vec{V}n) ]$$

dans laquelle n = 1, 2, ..., $\underline{p}$, et $\underline{p}$ est un entier supérieur ou égal à 2, $\Delta\vec{V}1$ à $\Delta\vec{V}p$ représentent des mesures accélérométriques successives, $\Delta\vec{\Theta}1$ à $\Delta\vec{\Theta}p$ représentent des mesures gyrométriques successives, et al à ap ainsi que b1 à bp représentent des coefficients à déterminer.

En outre, dans la première étape B du procédé conforme à l'invention, on utilise comme critère d'erreur la valeur moyenne de la vitesse $\Delta\vec{V}moy$, obtenue à partir de l'incrément de vitesse $\Delta\vec{V}F$ et calculée, pour un mouvement perturbant périodique de pulsation $\Omega$, sur une période $2\pi/\Omega$ dudit mouvement perturbant, par la relation :

$$\Delta \vec{V}moy \; = \; \Omega/2\pi \int_{0}^{2\pi/\Omega} \Delta \vec{V}F \; dt$$

Ensuite, dans la seconde étape C du procédé conforme à l'invention, pour la forme générale de $\Delta \vec{V}F$ définie précédemment, on détermine les coefficients a1 à ap et b1 à bp en effectuant les opérations suivantes :

- on forme un développement limité de ladite valeur moyenne de la vitesse $\Delta \vec{V}moy$ ; et
- on calcule les coefficients a1 à ap et b1 à bp permettant d'annuler au moins le premier ordre dudit développement limité.

A titre d'illustration, on explicite ci-dessous dans deux exemples particuliers les étapes décrites précédemment du procédé conforme à l'invention, lesdits exemples permettant d'obtenir deux solutions particulièrement avantageuses.

Dans un premier exemple, on utilise une forme théorique particulière de $\Delta \vec{V}F$ définie par la relation :

$$\Delta \vec{V}F = B(h) [\Delta \vec{V}i + \Delta \vec{V}j + (ai\Delta \vec{\Theta}i + aj\Delta \vec{\Theta}j) \wedge (bi\Delta \vec{V}i + bj\Delta \vec{V}j)]$$

$\Delta \vec{\Theta}j$ et $\Delta \vec{V}j$ représentant respectivement deux mesures successives de $\Delta \vec{\Theta}i$ et $\Delta \vec{V}i$.
$\Delta \vec{\Theta}i$ et $\Delta \vec{V}i$ effectuées à un temps $\underline{h}$ après les mesures de $\Delta \vec{\Theta}i$ et $\Delta \vec{V}i$.

Selon l'invention, on optimise cette forme théorique en cherchant les valeurs de ai, aj, bi et bj qui limitent l'erreur sous mouvement de godille.

A cet effet, on calcule d'abord $\Delta \vec{V}moy$, à partir de la relation :

$$\Delta \vec{V}moy \; = \; \Omega/2\pi \int_{0}^{2\pi/\Omega} \Delta \vec{V}F(t)dt$$

Puis on effectue un développement limité de $\Delta \vec{V}moy$ qui donne comme résultat :

$$\Delta \vec{V}moy \; = \; \begin{bmatrix} 0 \\ \alpha \left[ (1/12)k1\Omega^2 h^3 \; - \; (1/240)k2\Omega^4 h^5 \right] \\ \beta \left[ (1/4)k3\Omega h^2 \; - \; (1/48)k4\Omega^3 h^4 \right] \end{bmatrix}$$

avec

$$\begin{cases} k1 \; = \; -1 + 6aibj - 6ajbi \\ \\ k2 \; = \; -1 + 30aibj - 30ajbi \\ \\ k3 \; = \; 1 + 2aibi + 2aibj + 2ajbi + 2ajbj \\ \\ k4 \; = \; 1 + 2aibi + 14aibj + 14ajbi + 2ajbj \end{cases}$$

7

et $\alpha$ et $\beta$ deux constantes.

On constate qu'il est impossible d'annuler les quatre coefficients k1 à k4 de façon simultanée.

L'annulation des coefficients permet d'obtenir un système mathématique de trois équations (formé des coefficients k1, k3, k4 par exemple) à quatre inconnues (ai, aj, bi, bj). Il existe donc une infinité de solutions, que l'on obtient en fixant la valeur d'une desdites inconnues.

Par exemple, en fixant ai, on obtient :

$$\begin{bmatrix} ai = ai & bi = -1/(12\ lai) \\ aj = lai & bj = 1/(12\ ai) \end{bmatrix}$$

avec $\underline{1}$ solution de l'équation :

$$l^2 + 61 - 1 = 0$$

qui admet deux solutions réelles :

$$l = -3 + \sqrt{10} \qquad et\ l = -3 - \sqrt{10}$$

Cette solution est particulièrement avantageuse car :

- d'une part, elle ne nécessite pour sa mise en oeuvre que deux mesures successives des données gyrométriques et accélérométriques, à savoir $\Delta\vec{\Theta}i$, $\Delta\vec{\Theta}j$, $\Delta\vec{V}i$ et $\Delta\vec{V}j$ ; et
- d'autre part, la précision obtenue par cette correction est satisfaisante.

Dans un second exemple, on utilise la forme générale de $\Delta\vec{V}F$ définie précédemment, avec p=3, de manière à obtenir un incrément de vitesse $\Delta\vec{V}F$ de la forme :

$$\Delta\vec{V}F = B(h)\ [\Delta\vec{V}1+\Delta\vec{V}2+\Delta\vec{V}3+(a1\Delta\vec{\Theta}1+a2\Delta\vec{\Theta}2+a3\Delta\vec{\Theta}3)\wedge(b1\Delta\vec{V}1+b2\Delta\vec{V}2+b3\Delta\vec{V}3)]$$

$\Delta\vec{V}1$ et $\Delta\vec{\Theta}1$, $\Delta\vec{V}2$ et $\Delta\vec{\Theta}2$, $\Delta\vec{V}3$ et $\Delta\vec{\Theta}3$ correspondant dans ce cas à des mesures effectuées à des instants t1+h/3, t1+(2h)/3, t1+h, t1 étant un instant quelconque.

En calculant :

$$\Delta\vec{V}moy\ =\ \Omega/2\pi \int_0^{2\pi/\Omega} \Delta\vec{V}F\ (t)\ dt$$

et en effectuant un développement limité de $\Delta\vec{V}moy$, dont on annule le premier ordre, de manière identique au premier exemple présenté précédemment, on obtient un système mathématique de cinq équations à six inconnues.

Ledit système mathématique permet d'obtenir, en fixant par exemple a3, les résultats suivants :

8

$$\left\{ \begin{array}{ll} a1 = ka3 & b1 = -\dfrac{19}{20} \cdot \dfrac{1}{a3} \\[3em] a2 = \dfrac{k(47k+7)}{19k^2-1}\, a3 & b2 = \dfrac{1}{20}\,\dfrac{133k+47}{(19k^2-1)} \cdot \dfrac{1}{a3} \\[3em] a3 = a3 & b3 = -\dfrac{1}{20k} \cdot \dfrac{1}{a3} \end{array} \right.$$

avec k solution de l'équation :

$$6859k^6 - 10830k^5 - 6612k^4 - 2000k^3 - 348k^2 - 30k + 1 = 0$$

qui admet deux solutions réelles :

$$k \simeq 0{,}024972137 \text{ et } k \simeq 2{,}1076122.$$

En plus de permettre une restitution extrêmement précise de la vitesse, cette dernière solution nécessite moins de calculs pour sa mise en oeuvre que par exemple la solution connue précitée.

En outre, ladite solution est particulièrement bien adaptée à une utilisation conjointe avec l'algorithme de Miller cité précédemment et généralement utilisé pour effectuer les calculs de transformation entre le trièdre mobile Tm et le trièdre fixe Tf.

La présente invention concerne également un dispositif de correction 16 destiné à remplacer le dispositif 8 de la figure 2 et permettant en particulier de mettre en oeuvre les résultats obtenus dans les deux exemples précités.

Selon l'invention, ledit dispositif de correction 16 représenté schématiquement sur la figure 4 comporte :

- un premier calculateur périphérique 17 susceptible d'effectuer des multiplications vectorielles, en particulier du type $an.\Delta\vec{\Theta}n$ et $bn.\Delta\vec{V}n$ ;

- un second calculateur périphérique 18 susceptible d'effectuer des produits vectoriels, en particulier du type :

$$\left( \sum_{n=1}^{n=p} an\Delta\vec{\Theta}n \right) \wedge \left( \sum_{n=1}^{n=p} bn\Delta\vec{V}n \right) \quad ;$$

et

- un calculateur central 19 relié, d'une part, par des doubles liaisons 20 et 21 respectivement auxdits premier et second calculateurs périphériques 17 et 18 et, d'autre part, par les liaisons 9 et 10 respectivement à l'ensemble 2 d'accéléromètres et à l'ensemble 1 de gyromètres, ledit calculateur central 19 coordonnant les différents calculs et transmettant à sa sortie par la liaison 11 la valeur de $\Delta\vec{V}eq$ calculée par la mise en oeuvre des résultats obtenus par le procédé conforme à l'invention décrit précédemment.

**Revendications**

1.   Procédé pour minimiser, dans un système de mesures inertielles à composants liés, l'erreur due à un mouvement perturbant quelconque dans la restitution de la vitesse, ladite vitesse étant restituée par la mise en oeuvre d'un procédé de restitution de vitesse approprié utilisant à cet effet des données accélérométriques et gyrométriques mesurées combinées à des coefficients spécifiques,

caractérisé en ce que, pour déterminer la vitesse VF dans un trièdre inertiel fixe du système, on utilise pour la mise en oeuvre du procédé de restitution de vitesse un incrément de vitesse $\Delta\vec{V}F$ présentant une forme théorique générale définie par la relation :

$$\Delta\vec{VF} = B(t) \ [\sum_{n=1}^{n=p} \Delta\vec{Vn} + (\sum_{n=1}^{n=p} an\Delta\Theta n) \ \Lambda \ (\sum_{n=1}^{n=p} bn\Delta Vn) \ ]$$

dans laquelle n = 1, 2, ..., p, et p est un entier supérieur ou égal à 2, $\Delta\vec{V}1$ à $\Delta\vec{V}p$ représentent des mesures accélérométriques successives effectuées dans un trièdre accélérométrique, $\Delta\vec{\Theta}1$ à $\Delta\vec{\Theta}p$ représentent des mesures gyrométriques successives, a1 à ap ainsi que b1 à bp représentent des coefficients spécifiques à déterminer, et B(t) est une matrice d'attitude dépendant du temps t et permettant d'effectuer le passage du trièdre accélérométrique vers le trièdre inertiel, et en ce que l'on réalise les opérations suivantes :

- on détermine un critère d'erreur, révélant l'erreur due à la présence dudit mouvement perturbant dans la restitution de la vitesse et déterminé à partir desdits coefficients spécifiques, ledit critère d'erreur correspondant à la valeur moyenne de la vitesse $\Delta\vec{V}moy$ obtenue à partir de l'incrément de vitesse $\Delta\vec{V}F$ ;
- on calcule les valeurs desdits coefficients spécifiques permettant de minimiser ledit critère d'erreur ; et
- on intègre lesdites valeurs calculées des coefficients dans ledit procédé de restitution de vitesse.

**2.** Procédé selon la revendication 1,
caractérisé en ce que, pour déterminer les coefficients spécifiques a1 à ap et b1 à bp :

- on effectue un développement limité de ladite valeur moyenne de la vitesse $\Delta\vec{V}moy$ ; et
- on calcule les coefficients a1 à ap et b1 à bp permettant d'annuler au moins le premier ordre dudit développement limité.

**3.** Procédé selon l'une des revendications 1 et 2,
caractérisé en ce que, pour un mouvement perturbant correspondant à un mouvement de godille constitué d'un mouvement conique et d'une accélération sinusoïdale selon l'axe du mouvement conique, on utilise une forme théorique générale de $\Delta\vec{V}F$ pour laquelle p = 2, permettant d'obtenir un incrément de vitesse défini par la relation :

$$\Delta\vec{V}F = B(t) \ [\Delta\vec{V}i + \Delta\vec{V}j + (ai\Delta\vec{\Theta}i + aj\Delta\vec{\Theta}j) \ \Lambda (bi\Delta\vec{V}i + bj\Delta\vec{V}j)]$$

dans laquelle, pour une valeur quelconque de ai, les coefficients aj, bi et bj vérifient :

$$\begin{bmatrix} aj = lai \\ bi = -1/(12 \ lai) \\ bj = 1/(12 \ ai) \end{bmatrix}$$

avec l solution de l'équation $l^2+6l-1 = 0$, $\Delta\vec{V}i$ et $\Delta\vec{V}j$ étant deux mesures accélérométriques successives et $\Delta\vec{\Theta}i$ et $\Delta\vec{\Theta}j$ étant deux mesures gyrométriques successives.

**4.** Procédé selon l'une des revendications 1 et 2,
caractérisé en ce que, pour un mouvement perturbant correspondant à un mouvement de godille constitué d'un mouvement conique et d'une accélération sinusoïdale selon l'axe du mouvement conique, on utilise une forme théorique générale de $\Delta\vec{V}F$ pour laquelle p=3 de manière à obtenir un incrément de vitesse défini par la relation :

$$\Delta\vec{V}F = B(t) \ [\Delta\vec{V}1 + \Delta\vec{V}2 + \Delta\vec{V}3 + (a1\Delta\vec{\Theta}1 + a2\Delta\vec{\Theta}2 + a3\Delta\vec{\Theta}3) \ \Lambda \ (b1\Delta\vec{V}1 + b2\Delta\vec{V}2 + b3\Delta\vec{V}3)]$$

dans laquelle, pour une valeur quelconque de a3, les coefficients a1, a2, b1, b2 et b3 vérifient :

$$a1 = ka3 \qquad\qquad b1 = -\frac{19}{20} \cdot \frac{1}{a3}$$

$$a2 = \frac{k(47k+7)}{19k^2 - 1}\, a3 \qquad b2 = \frac{1}{20}\,\frac{133k+47}{(19k^2-1)} \cdot \frac{1}{a3}$$

$$b3 = -\frac{1}{20k} \cdot \frac{1}{a3}$$

avec k solution de l'équation :

$$6859k^6 - 10830k^5 - 6612k^4 - 2000k^3 - 348k^2 - 30k + 1 = 0$$

5. Dispositif pour minimiser dans un système de mesures inertielles à composants liés l'erreur due à un mouvement perturbant quelconque dans la restitution de la vitesse, ledit dispositif étant relié à un ensemble (2) d'accéléromètres permettant de mesurer lesdites données accélérométriques ($\Delta\vec{V}$) et à un ensemble (1) de gyromètres permettant de mesurer lesdites données gyrométriques ($\Delta\vec{\Theta}$) et permettant la mise en oeuvre du procédé spécifié sous l'une quelconque des revendications 1 à 4, caractérisé en ce qu'il comporte :

-   un premier calculateur périphérique (17) susceptible d'effectuer des multiplications vectorielles ;
-   un second calculateur périphérique (18) susceptible d'effectuer des produits vectoriels ; et
-   un calculateur central (19), programmé à réaliser, en liaison avec lesdits premier et second calculateurs périphériques (17, 18), le calcul d'un incrément de vitesse $\Delta\vec{V}F$ présentant une forme théorique générale définie par la relation :

$$\Delta\vec{V}F = B(t)\ [\sum_{n=1}^{n=p} \Delta\vec{V}n\ +\ (\sum_{n=1}^{n=p} an\Delta\vec{\Theta}n)\ \Lambda\ (\sum_{n=1}^{n=p} bn\Delta\vec{V}n)\ ]$$

dans laquelle n = 1, 2, ..., p, et p est un entier supérieur ou égal à 2, $\Delta\vec{V}1$ à $\Delta\vec{V}p$ représentent des mesures accélérométriques successives effectuées dans un trièdre accélérométrique, $\Delta\vec{\Theta}1$ à $\Delta\vec{\Theta}p$ représentent des mesures gyrométriques successives, a1 à ap ainsi que b1 à bp représentent des coefficients spécifiques déterminés à l'aide de la valeur moyenne de la vitesse $\Delta\vec{V}moy$ obtenue à partir de l'incrément de vitesse $\Delta\vec{V}F$, et B(t) est une matrice d'attitude dépendant du temps $\underline{t}$ et permettant d'effectuer le passage du trièdre accélérométrique vers le trièdre inertiel.

**Patentansprüche**

1. Verfahren zur Minimierung des Fehlers infolge einer Störbewegung bei der Bestimmung der Geschwindigkeit in einem Trägheitsmeßsystem in Strap-Down-Technik, wobei die Geschwindigkeit durch die Anwendung eines geeigneten Verfahrens zur Geschwindigkeitsbestimmung ermittelt wird, das zu diesem Zweck Beschleunigungs- und Kreiselmeßdaten einsetzt, die mit spezifischen Koeffizienten kombiniert werden, dadurch gekennzeichnet, daß zur Bestimmung der Geschwindigkeit VF in einem festen Trägheitsachsenkreuz des Systems zur Anwendung des Verfahrens zur Geschwindigkeitsbestimmung ein Geschwindigkeitsinkrement $\Delta\vec{V}F$ mit einer allgemeinen theoretischen Form eingesetzt wird, die durch die Beziehung:

$$\overrightarrow{\Delta V F} = B(t) \; [\sum_{n=1}^{n=p} \overrightarrow{\Delta Vn} + (\sum_{n=1}^{n=p} an\overrightarrow{\Delta \Theta n}) \; \Lambda \; (\sum_{n=1}^{n=p} bn\overrightarrow{\Delta Vn})]$$

definiert wird, in der n = 1, 2, ..., p, und p eine ganze Zahl größer oder gleich 2 ist, $\Delta\vec{V}1$ bis $\Delta\vec{V}p$ aufeinanderfolgende Beschleunigungsmessungen in einem Beschleunigungsachsenkreuz darstellen, $\Delta\vec{\Theta}1$ bis $\Delta\vec{\Theta}p$ aufeinanderfolgende Kreiselmessungen darstellen, al bis ap sowie bl bis bp zu bestimmende spezifische Koeffizienten darstellen und B(t) eine von der Zeit t abhängige Lagematrix ist, die den Übergang vom Beschleunigungsachsenkreuz zum Trägheitsachsenkreuz ermöglicht, und dadurch, daß folgende Arbeitsgänge ausgeführt werden:

- Bestimmung eines Fehlerkriteriums, das den Fehler infolge der vorhandenen Störbewegung bei der Bestimmung der Geschwindigkeit ermittelt und aus den spezifischen Koeffizienten bestimmt wird, wobei das Fehlerkriterium dem mittleren Wert der Geschwindigkeit $\Delta\vec{V}$moy aus dem Geschwindigkeitsinkrement $\Delta\vec{V}$F entspricht;
- Berechnung der Werte der spezifischen Koeffizienten zur Minimierung des Fehlerkriteriums und
- Einfügung der Rechenwerte der Koeffizienten in das Verfahren zur Bestimmung der Geschwindigkeit.

**2.** Verfahren nach Anspruch 1,
dadurch gekennzeichnet, daß zur Bestimmung der spezifischen Koeffizienten al bis ap und bl bis bp:

- eine begrenzte Entwicklung des mittleren Wertes der Geschwindigkeit $\Delta\vec{V}$moy vorgenommen wird und
- die Koeffizienten al bis ap und bl bis bp berechnet werden, durch die zumindest die erste Ordnung der begrenzten Entwicklung aufgehoben werden kann.

**3.** Verfahren nach einem der Ansprüche 1 und 2,
dadurch gekennzeichnet, daß bei einer Störbewegung, die einer aus einer kegelförmigen Bewegung und einer sinusförmigen Beschleunigung nach der Achse der kegelförmigen Bewegung zusammengesetzten Scullingbewegung entspricht, eine allgemeine theoretische Form von $\Delta\vec{V}$F mit p=2 angewandt wird, durch die sich ein Geschwindigkeitsinkrement ergibt, das nach folgender Beziehung bestimmt wird:

$$\Delta\vec{V}F = B(t) \; [\Delta\vec{V}i + \Delta\vec{V}j + (ai\Delta\vec{\Theta}i + aj\Delta\vec{\Theta}j) \; \Lambda(bi\Delta\vec{V}i + bj\Delta\vec{V}j)],$$

in der die Koeffizienten aj, bi und bj, für irgendeinen Wert von ai, entsprechen:

$$\begin{bmatrix} aj = lai \\ bi = -1/(12 \; lai) \\ bj = 1/(12 \; ai) \end{bmatrix}$$

mit l als Lösung der Gleichung $l^2 + 6l - 1 = 0$, wobei $\Delta\vec{V}i$ und $\Delta\vec{V}j$ zwei aufeinanderfolgende Beschleunigungsmessungen und $\Delta\vec{\Theta}1$ und $\Delta\vec{\Theta}j$ zwei aufeinanderfolgende Kreiselmessungen sind.

**4.** Verfahren nach einem der Ansprüche 1 und 2,
dadurch gekennzeichnet, daß bei einer Störbewegung, die einer aus einer kegelförmigen Bewegung und einer sinusförmigen Beschleunigung nach der Achse der kegelförmigen Bewegung zusammengesetzten Scullingbewegung entspricht, eine allgemeine theoretische Form von $\Delta\vec{V}$F mit p=3 angewandt wird, durch die sich ein Geschwindigkeitsinkrement ergibt, das nach folgender Beziehung bestimmt wird:

$$\Delta\vec{V}F = B(t) \; [\Delta\vec{V}1 + \Delta\vec{V}2 + \Delta\vec{V}3 + (a1\Delta\vec{\Theta}1 + a2\Delta\vec{\Theta}2 + a3\Delta\vec{\Theta}3) \; \Lambda \; (b1\Delta\vec{V}1 + b2\Delta\vec{V}2 + b3\Delta\vec{V}3)],$$

in der die Koeffizienten a1, a2, b1, b2 und b3, für irgendeinen Wert von a3, entsprechen:

$$a1 = ka3 \qquad b1 = -\frac{19}{20} \cdot \frac{1}{a3}$$

$$a2 = \frac{k(47k+7)}{19k^2 - 1} a3 \qquad b2 = \frac{1}{20} \frac{133k + 47}{(19k^2 - 1)} \cdot \frac{1}{a3}$$

$$b3 = -\frac{1}{20k} \cdot \frac{1}{a3} .$$

mit k als Lösung der Gleichung:

$$6859k^6 - 10830k^5 - 6612k^4 - 2000k^3 - 348k^2 - 30k + 1 = 0.$$

**5.** Vorrichtung zur Minimierung des Fehlers infolge einer Störbewegung bei der Bestimmung der Geschwindigkeit in einem Trägheitsmeßsystem in Strap-Down-Technik, wobei die Vorrichtung mit einer Beschleunigungsmeßanlage (2) zur Messung der Beschleunigungsmeßdaten ($\Delta\vec{V}$) und einer Kreiselanlage (1) zur Messung der Kreiselmeßdaten ($\Delta\vec{\Theta}$) verbunden ist und die Anwendung des in einem der Ansprüche 1 bis 4 spezifizierten Verfahrens ermöglicht,
dadurch gekennzeichnet, daß sie umfaßt:

- einen ersten peripheren Rechner (17) zur Ausführung von Vektormultiplikationen;
- einen zweiten peripheren Rechner (18) zur Ausführung von Vektorprodukten und
- einen zentralen Rechner (19), der so programmiert ist, daß er in Verbindung mit dem ersten und zweiten peripheren Rechner (17, 18) die Berechnung eines Geschwindigkeitsinkrements $\Delta\vec{V}F$ ermöglicht, dessen allgemeine theoretische Form durch folgende Beziehung bestimmt wird:

$$\Delta\vec{V}F = B(t) \left[ \sum_{n=1}^{n=p} \Delta\vec{V}n + \left( \sum_{n=1}^{n=p} an\Delta\vec{\Theta}n \right) \wedge \left( \sum_{n=1}^{n=p} bn\Delta\vec{V}n \right) \right]$$

in der n = 1, 2, ..., p, und eine ganze Zahl größer oder gleich 2 ist, $\Delta\vec{V}1$ bis $\Delta\vec{V}p$ aufeinanderfolgende Beschleunigungsmessungen in einem Beschleunigungsachsenkreuz darstellen, $\Delta\vec{\Theta}1$ bis $\Delta\vec{\Theta}p$ aufeinanderfolgende Kreiselmessungen darstellen, a1 bis ap sowie b1 bis bp spezifische Koeffizienten darstellen, die mit Hilfe des mittleren Wertes der Geschwindigkeit $\Delta\vec{V}moy$ aus dem Geschwindigkeitsinkrement $\Delta\vec{V}F$ bestimmt werden, und B(t) eine von der Zeit t abhängige Lagematrix ist, die den Übergang vom Beschleunigungsachsenkreuz zum Trägheitsachsenkreuz ermöglicht.

**Claims**

1. Process for minimizing, in a strapdown inertial measurement system, the error due to any perturbing motion in the retrieval of the velocity, the said velocity being retrieved by implementing an appropriate velocity retrieval process using for this purpose measured accelerometric and gyrometric data combined with specific coefficients, characterized in that, in order to determine the velocity VF in a fixed inertial trihedron of the system, the implementation of the velocity retrieval process utilizes a velocity increment $\Delta\vec{V}F$ exhibiting a general theoretical form defined by the relation:

$$\vec{\Delta VF} = B(t) \left[ \sum_{n=1}^{n=p} \vec{\Delta Vn} + (\sum_{n=1}^{n=p} an\vec{\Delta\Theta n}) \wedge (\sum_{n=1}^{n=p} bn\vec{\Delta Vn}) \right]$$

in which n = 1, 2, ..., $\underline{p}$, and $\underline{p}$ is an integer greater than or equal to 2, $\Delta\vec{V}1$ to $\Delta\vec{V}p$ represent successive accelerometric measurements carried out in an accelerometric trihedron, $\Delta\vec{\Theta}1$ to $\Delta\vec{\Theta}p$ represent successive gyrometric measurements, a1 to ap as well as b1 to bp represent specific coefficients to be determined, and B(t) is an attitude matrix depending on the time $\underline{t}$ and making it possible to transfer from the accelerometric trihedron to the inertial trihedron, and in that the following operations are carried out:

- an error criterion is determined, highlighting the error due to the presence of the said perturbing motion in the retrieval of the velocity and determined from the said specific coefficients, the said error criterion corresponding to the mean value of the velocity $\Delta\vec{V}$mea obtained from the velocity increment $\Delta\vec{V}F$;
- the values of the said specific coefficients which enable the said error criterion to be minimized are calculated; and
- the said calculated values of the coefficients are integrated into the said velocity retrieval process.

2. Process according to Claim 1,
   characterized in that, to determine the specific coefficients a1 to ap and b1 to bp:

   - a truncated expansion of the said mean value of the velocity $\Delta\vec{V}$mea is carried out; and
   - the coefficients al to ap and bl to bp which make it possible to zero at least the first order in the said truncated expansion are calculated.

3. Process according to one of Claims 1 and 2, characterized in that, for a perturbing motion corresponding to a sculling motion consisting of a conical motion and a sinusoidal acceleration along the axis of the conical motion, a general theoretical form of $\Delta\vec{V}F$ is used for which p=2, making it possible to obtain a velocity increment defined by the relation:

$$\Delta\vec{V}F = B(t) [\Delta\vec{V}i + \Delta\vec{V}j + (ai\Delta\vec{\Theta}i + aj\Delta\vec{\Theta}j) \wedge (bi\Delta\vec{V}i + bj\Delta\vec{V}j)]$$

in which, for any value of ai, the coefficients aj, bi and bj satisfy:

$$\begin{bmatrix} aj = lai \\ bi = -1/(12\ lai) \\ bj = 1/(12\ ai) \end{bmatrix}$$

with $\underline{l}$ a solution of the equation $l^2+6l-1=0$, $\Delta\vec{V}i$ and $\Delta\vec{V}j$ being two successive accelerometric measurements and $\Delta\vec{\Theta}i$ and $\Delta\vec{\Theta}j$ being two successive gyrometric measurements.

4. Process according to one of Claims 1 and 2, characterized in that, for a perturbing motion corresponding to a sculling motion consisting of a conical motion and a sinusoidal acceleration along the axis of the conical motion, a general theoretical form of $\Delta\vec{V}F$ is used for which p=3, making it possible to obtain a velocity increment defined by the relation:

$$\Delta\vec{V}F = B(t) [\Delta\vec{V}1 + \Delta\vec{V}2 + \Delta\vec{V}3 + (a1\Delta\vec{\Theta}1 + a2\Delta\vec{\Theta}2 + a3\Delta\vec{\Theta}3) \wedge (b1\Delta\vec{V}1 + b2\Delta\vec{V}2 + b3\Delta\vec{V}3)]$$

in which, for any value of a3, the coefficients a1, a2, b1, b2 and b3 satisfy:

$$\left\{ \begin{array}{ll} a1 = ka3 & b1 = -\dfrac{19}{20} \cdot \dfrac{1}{a3} \\[3ex] a2 = \dfrac{k(47k+7)}{19k^2-1}\, a3 & b2 = \dfrac{1}{20}\, \dfrac{133k+47}{(19k^2-1)} \cdot \dfrac{1}{a3} \\[3ex] & b3 = -\dfrac{1}{20k} \cdot \dfrac{1}{a3} \end{array} \right.$$

with k a solution of the equation:

$$6859k^6 - 10830k^5 - 6612k^4 - 2000k^3 - 348k^2 - 30k + 1 = 0$$

5. Device for minimizing in a strapdown inertial measurement system the error due to any perturbing motion in the retrieval of the velocity, the said device being connected to an assembly (2) of accelerometers making it possible to measure the said accelerometric data ($\Delta\vec{V}$) and to an assembly (1) of gyrometers making it possible to measure the said gyrometric data ($\Delta\vec{\Theta}$), and making possible the implementation of the process specified under any one of Claims 1 to 4,
characterized in that it includes:

- a first peripheral computer (17) capable of carrying out vector multiplications;
- a second peripheral computer (18) capable of carrying out vector products; and
- a central computer (19), programmed to carry out, in conjunction with the said first and second peripheral computers (17, 18), the calculation of a velocity increment $\Delta\vec{V}F$ exhibiting a general theoretical form defined by the relation:

$$\Delta\vec{V}F = B(t)\left[\sum_{n=1}^{n=p}\Delta\vec{V}n + \left(\sum_{n=1}^{n=p}an\Delta\Theta n\right) \wedge \left(\sum_{n=1}^{n=p}bn\Delta Vn\right)\right]$$

in which n = 1, 2, ..., ..., p, and p is an integer greater than or equal to 2, $\Delta\vec{V}1$ to $\Delta\vec{V}p$ represent successive accelerometric measurements carried out in an accelerometric trihedron, $\Delta\vec{\Theta}1$ to $\Delta\vec{\Theta}p$ represent successive gyrometric measurements, a1 to ap as well as b1 to bp represent specific coefficients determined using the mean value of the velocity $\Delta\vec{V}mea$ obtained from the velocity increment $\Delta\vec{V}F$, and B(t) is an attitude matrix depending on the time t and making it possible to transfer from the accelerometric trihedron to the inertial trihedron.

$\overrightarrow{\Delta V}$

Tm

$\overrightarrow{\Delta Q}$

Tf

## FIG.1

## FIG.2

A

12

15

B

13

C

14

D

FIG.3

FIG.4

17

20

10

9

19

11

21

18

16